# EUROPEAN PATENT SPECIFICATION

(11) **EP 2 910 608 B1**
(45) Date of publication and mention of the grant of the patent: **31.05.2017**
(21) Application number: 14000669.3
(22) Date of filing: 25.02.2014
(51) Int. Cl.: C09B 35/205, C09D 11/328, D06P 1/06

(54) **DIMERIC ANIONIC MONOAZO DYES**
DIMERE ANIONISCHE MONOAZOFARBSTOFFE
COLORANTS MONOAZO ANIONIQUE DIMÈRE

(43) Date of publication of application: 26.08.2015
(73) Proprietor: Archroma IP GmbH, 4153 Reinach (CH)
(72) Inventor: Gisler, Markus, Dr., 4310 Rheinfelden (CH); Nusser, Rainer, Dr., 79395 Neuenburg am Rhein (DE)
(74) Representative: Ricker, Mathias

(56) References cited:
- WO-A2-2010/010032
- DE-A1- 2 606 560
- JP-A- H04 212 968
- US-A- 2 335 137
- US-A- 4 521 591
- US-A- 5 434 251

## Description

### Field of the invention

The present invention relates to novel dimeric anionic monoazo dyes, a process for their preparation and their use for dyeing and/or printing organic substrates.

### Background of the invention

Dimeric monoazo dyes and dyes with bridging members are known in the art. Such dyes, processes for their preparation and their use for dyeing and/or printing organic substrates are disclosed in, for example, WO 2007/131957, WO 2010/010032 and WO 2010/028799.

However, there is still a need for dimeric monoazo dyes that have improved properties such as dye levelness (i.e. the uniformity of color shade along the substrate to be dyed), color fastness (light and wet/wash fastness, i.e. the resistance of the color to fading and running when exposed to light and wetness), and build-up behavior.

### Object of the invention

It is an object of the present invention to provide improved dimeric anionic monoazo dyes with improved dyeing and printing characteristics, such as levelness, light and wet/wash fastness and build-up behavior and which are highly suitable for dyeing or printing organic substrates of natural and synthetic origin, such as paper or natural and synthetic polyamides and wool textiles, and can be applied in combination with other dyes of the same class. The scope of the invention is to be understood that with the dyes of the subject application at least one characteristic feature important for dyeing and printing is improved compared to the dyes of the prior art. Certain embodiments within the subject application are improved with regard to several of those characteristics, in particular build-up behavior, wet/wash fastness and/or light fastness. The improvement of the dyes of the present invention is in particular achieved during dyeing and printing processes, such as inkjet printing on paper and/or natural and synthetic polyamides, respectively.

### Summary of the invention

These and other objects are achieved by the compound of formula (I) according to the invention.

### Detailed description of the invention

In a **first aspect,** the invention provides a compound of the general formula (I) 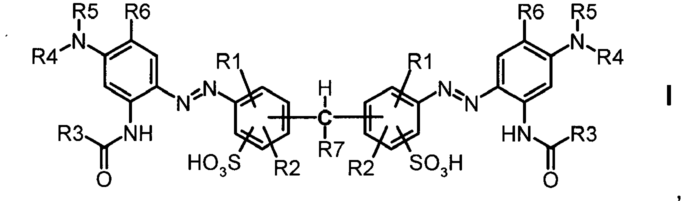 wherein
- R1: is hydrogen, unsubstituted or substituted, linear or branched C₁₋₁₂ alkyl, unsubstituted or substituted linear or branched C₁₋₁₂ alkoxy, unsubstituted or substituted aryl or halogen,
- R2: is hydrogen, unsubstituted or substituted linear or branched C₁₋₁₂ alkyl,
- R3: is unsubstituted or substituted, linear or branched C₁₋₁₂ alkyl, unsubstituted or substituted, linear or branched C₁₋₁₂ alkoxy, unsubstituted or substituted aryl or NR8R9,
- R4, R5: are unsubstituted or substituted linear or branched C₁₋₁₂ alkyl, unsubstituted or substituted linear or branched C₁₋₁₂ alkenyl, unsubstituted or substituted linear or branched C₁₋₁₂ alkoxy, unsubstituted or substituted aryl, 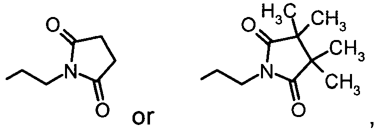
- R6: is hydrogen, unsubstituted or substituted, linear or branched C₁₋₁₂ alkyl, unsubstituted or substituted, linear or branched C₁₋₁₂ alkoxy,
- R7: is hydrogen, unsubstituted or substituted, linear or branched C₁₋₁₂ alkyl,
- R8, R9: are independently hydrogen or defined as R4 and R5.

In a further embodiment, the -SO₃H groups within the above referenced compounds of formula (I) are in *ortho*-position to the azo groups.

In a still further embodiment, the -SO₃H groups within the above referenced compounds of formula (I) are in *ortho*-position to the azo groups, and the -SO₃H groups are in *para*-position to R₁.

In a still further embodiment, the -SO₃H groups within the above referenced compounds of formula (I) are in *ortho*-position to the azo groups, and the CHR₇ group is in *para* position to the azo groups.

In a still further embodiment, the -SO₃H groups within the above referenced compounds of formula (I) are in *ortho*-position to the azo groups, and the -SO₃H groups are in *para*-position to R₁, and the CHR₇ group is in *para* position to the azo groups.

Specific embodiments of the compound of formula (I) according to the invention are described in more detail hereinunder.

The unsubstituted or substituted alkyl groups, the unsubstituted or substituted alkenyl groups and the unsubstituted or substituted alkoxy groups are either linear or branched.

In one embodiment, the substituents of the substituted, linear or branched, alkyl, alkenyl, alkoxy and aryl groups are selected from the group consisting of halogen, -OH, -COOH, -CN, aryl, aryloxy, -O(C₁₋₄ alkyl), -O(C₁₋₄ alkoxy), -CO-O-C₁₋₄ alkyl, -O-CO-C₁₋₄ alkyl, -O-CO-aryl, -CO-(O-CH₂-CH₂)ₙ-O-C₁₋₄ alkyl, wherein n is from 1 to 10, C₁₋₄ alkenyl, C₁₋₄ alkynyl, -NRₓR_{y}, wherein Rₓ and R_{y} are independently hydrogen or C₁₋₄ alkyl.

In one embodiment,
- R1: is hydrogen, unsubstituted or substituted, linear or branched C₁₋₆ alkyl, unsubstituted or substituted, linear or branched C₁₋₆ alkoxy or halogen,
- R2: is hydrogen or unsubstituted or substituted, linear or branched C₁₋₁₂ alkyl,
- R3: is unsubstituted or substituted, linear or branched C₁₋₁₂ alkyl, unsubstituted or substituted, linear or branched C₁₋₁₂ alkoxy, unsubstituted or substituted aryl or NH₂,
- R4, R5: are unsubstituted or substituted, linear or branched C₁₋₁₂ alkyl, unsubstituted or substituted, linear or branched C₁₋₁₂ alkenyl, unsubstituted or substituted, linear or branched C₁₋₁₂ alkoxy, unsubstituted or substituted aryl, 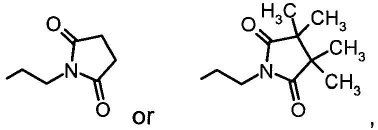
- R6: is hydrogen, unsubstituted or substituted, linear or branched C₁₋₆ alkyl, unsubstituted or substituted, linear or branched C₁₋₆ alkoxy,
- R7: is hydrogen, unsubstituted or substituted, linear or branched C₁₋₆ alkyl.

In a further embodiment,
- R1: is hydrogen, -CH₃, -Cl or -OCH₃,
- R2: is hydrogen or -CH₃,
- R3: is -CH₃, -CH₂CH₃, -CH₂CH₂CH₃, -C₆H₅, -C₆H₄CH₃, -CH₂CH₂Cl,-CH₂OCH₃, -CH₂OCH₂CH₃, -CH₂OH, -CH₂OC₆H₅, -OCH₃, -OCH₂CH₃,-OCH₂CH₂CH₃, -OCH₂CH₂OCH₂CH₃, -OCH₂CH₂CH₂CH₂CH₃,-OCH₂CH(CH₂CH₃)CH₂CH₂CH₂CH₃, -OC₁₀H₂₁, -OC₁₂H₂₅ or NH₂,
- R4, R5: are -CH₃, -CH₂CH₃, -CH₂C₆H₅, -CH₂CH₂CH₃, -CH₂CH₂CH₂CH₃,-CH₂CH₂CH₂CH₂CH₃, -CH₂CH₂CH₂CH₂CH₂CH₂CH₃, CH₂CH₂OH,-CH₂CH(OH)CH₂CH₃, -CH₂CH=CH₂, -CH₂CH₂C≡N,-CH₂CH₂COOCH₂CH₂OCH₃, -CH₂CH₂COOCH₃,-CH₂CH₂OCH₂CH₂OCH₃, -CH₂CH₂OCOCH₂CH₃, -CH₂CH₂OCOC₆H₅,-CH₂CH₂OCOCH₃, -CH₂COOCH₃, -CH₂CH₂CH₂CH₂CH₂CH₂CH₃, 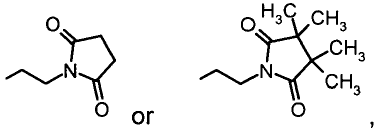
- R6: is hydrogen, -CH₃, -CH₂CH₃, -CH₂CH₂OH, -OCH₃, -OCH₂CH₃ or - OCH₂C₆H₅,
- R7: is hydrogen, -CH₃ or -CH₂CH₃.

In a further embodiment,
- R1: is hydrogen, -CH₃, -Cl or -OCH₃,
- R2: is hydrogen or -CH₃,
- R3: is -CH₃, -CH₂CH₃, -CH₂CH₂CH₃, -C₆H₅, -C₆H₄CH₃, -CH₂CH₂Cl,-CH₂OCH₃, -CH₂OCH₂CH₃, -CH₂OH, -CH₂OC₆H₅, -OCH₃, -OCH₂CH₃,-OCH₂CH₂CH₃, -OCH₂CH₂OCH₂CH₃, -OCH₂CH₂CH₂CH₂CH₃,-OCH₂CH(CH₂CH₃)CH₂CH₂CH₂CH₃, -OC₁₀H₂₁, -OC₁₂H₂₅ or NH₂,
- R4, R5: are -CH₃, -CH₂CH₃, -CH₂C₆H₅, -CH₂CH₂CH₃, -CH₂CH₂CH₂CH₃,-CH₂CH₂CH₂CH₂CH₃, -CH₂CH₂CH₂CH₂CH₂CH₂CH₃, CH₂CH₂OH,-CH₂CH(OH)CH₂CH₃, -CH₂CH=CH₂, -CH₂CH₂C≡N,-CH₂CH₂COOCH₂CH₂OCH₃, -CH₂CH₂COOCH₃,-CH₂CH₂OCH₂CH₂OCH₃, -CH₂CH₂OCOCH₂CH₃, -CH₂CH₂OCOC₆H₅,-CH₂CH₂OCOCH₃, -CH₂COOCH₃, -CH₂CH₂CH₂CH₂CH₂CH₂CH₃, 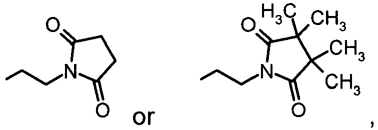
- R6: is hydrogen, -CH₃, -CH₂CH₃, -CH₂CH₂OH, -OCH₃, -OCH₂CH₃ or - OCH₂C₆H₅,
- R7: is hydrogen.

In a further embodiment,
- R1: is hydrogen, -CH₃, -Cl or -OCH₃,
- R2: is hydrogen,
- R3: is C₁₋₃ alkyl or -NH₂,
- R4, R5: are unsubstituted or substituted linear C₂₋₆ alkyl or benzyl,
- R6: is hydrogen, -CH₃, -CH₂CH₃, -CH₂CH₂OH, -OCH₃, -OCH₂CH₃ or - OCH₂C₆H₅,
- R7: is hydrogen.

In a further embodiment,
- R1: is hydrogen, -CH₃ or -Cl,
- R2: is hydrogen,
- R3: is -CH₃, -CH₂CH₃ or -NH₂,
- R4, R5: are unsubstituted or substituted linear C₂₋₆ alkyl or benzyl,
- R6, R7: are hydrogen.

In a further embodiment,
- R1, R2: are hydrogen,
- R3,: is -CH₃,
- R4, R5: are unsubstituted or substituted linear C₂₋₆ alkyl or benzyl,
- R6, R7: are hydrogen.

In a still further embodiment,
- R1, R2: are hydrogen,
- R3,: is -CH3,
- R4, R5: are -CH₂CH₃,
- R6, R7: are hydrogen.

With regard to the above referenced embodiments of the compounds according to the first aspect of the invention the following stereochemical structures are particular embodiments within these embodiments:

In a further embodiment, the -SO₃H groups within the above referenced compounds of formula (I) are in *ortho*-position to the azo groups.

In a still further embodiment, the -SO₃H groups within the above referenced compounds of formula (I) are in *ortho*-position to the azo groups, and the -SO₃H groups are in *para*-position to R₁.

In a still further embodiment, the -SO₃H groups within the above referenced compounds of formula (I) are in *ortho*-position to the azo groups, and the CHR₇ group is in *para* position to the azo groups.

In a still further embodiment, the -SO₃H groups within the above referenced compounds of formula (I) are in *ortho*-position to the azo groups, and the -SO₃H groups are in *para*-position to R₁, and the CHR₇ group is in *para* position to the azo groups.

As used herein, the term "*compound*" encompasses any single compound or any mixture of two or more compounds of formula (I) as defined herein. Thus, the term "compound" also encompasses mixtures of two or more compounds of formula (I) which are different with respect to their chemical structure and/or with regard to their stereochemical structure.

The term *"isomers"* as used herein relates to the various *meta, ortho* and/or para-substituted compounds of formula (I) according to the invention. Accordingly, a mixture of isomers comprises or consists of two or more compounds of formula (I) that are identical with regard to their chemical structure but are different with regard to their stereochemical structure. In particular, the term "isomers" encompasses all embodiments of the compounds of formula (I) having respectively the same chemical structure, and wherein the -SO₃H groups are in *ortho, para or* meta-position to the azo groups, and wherein the CHR₇ - group is in *para, ortho or meta* position to the respective azo groups

The isomers may be separated from each other by conventional separation methods such as crystallization.

In one embodiment, the compound of formula (I) according to the invention may be obtained in the form of a single compound.

In a further embodiment, the compound of formula (I) according to the invention may be obtained in the form of a mixture comprising or consisting of two or more isomers.

In one embodiment said mixture comprises or consists of two or more isomers, wherein the isomer having the -SO₃H groups in *ortho* position to the azo groups is the predominant isomer.

In a further embodiment, said mixture comprises or consists of two or more isomers, wherein the isomer having the -SO₃H groups in *ortho*-position to the azo groups, and the -SO3H groups in para-position to R₁ is the predominant isomer.

In a still further embodiment, said mixture comprises or consists of two or more isomers, wherein the isomer having the -SO₃H groups in *ortho*-position to the azo groups, and the CHR₇ group in *para* position to the azo groups is the predominant isomer.

In a still further embodiment, said mixture comprises or consists of two or more isomers, wherein the isomer having the following configuration is the predominant isomer is within the mixture:
the -SO₃H groups in *ortho* position to the azo groups,
the CHR₇ - group in *para* position to the azo groups, and
the -SO₃H groups are in para position relative to R₁.

In a **second aspect,** the invention relates to a process for the manufacture of the compound of formula (I) according to the invention.

The compound of formula (I) according to invention can be prepared under conventional conditions. In these processes, both amine functions of a compound of formula (II) 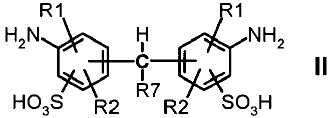 are conventionally diazotized and coupled onto two equivalents of a compound of formula (III) 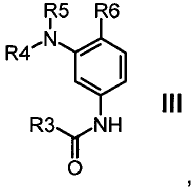 wherein the substituents are each as defined above. The coupling components of formula (III) are mostly standard intermediates in the synthesis of dispersion dyes and can be produced under conventional conditions.

Depending on the reaction and/or isolation conditions, the compound of formula (I) according to the invention can be obtained as free acid, as a salt or as a mixed salt which contains for example one or more cations selected from alkali metal ions, for example a sodium ion, or an ammonium ion or alkylammonium cation, for example mono-, di- or trimethyl- or -ethylammonium cations. The compound of formula (I) according to the invention can be converted by conventional techniques from the free acid into a salt or into a mixed salt or vice versa or from one salt form into another. If desired, the compound of formula (I) according to the invention can be further purified by diafiltration, to separate unwanted salts and synthesis by-products from the crude anionic dye.

The removal of unwanted salts and synthesis by-products and partial removal of water from the crude dye solution is carried out by means of a semipermeable membrane by applying a pressure whereby the dye is obtained without the unwanted salts and synthesis by-products as a solution and, if necessary, as a solid body in a conventional manner.

In one embodiment, the dye solution contains an isomeric mixture of the compound of formula (I) according to the invention.

In a **third aspect,** the invention relates to a process for dyeing and/or printing an organic substrate with a compound of formula (I) according to the invention.

In particular, the invention relates to a process for dyeing and/or printing an organic substrate comprising the contacting of at least one compound of formula (I) according to the invention with said organic substrate.

The term *"dyeing"* as used herein encompasses all processes of adding color to an organic substrate. Dyeing is normally carried out in a dyebath containing one or more dyes, or dyeing compositions.

The term *"printing"* as used herein is to be understood as a process to reproduce text or images on an organic substrate. The printing process may be an inkjet printing process, which is a non-impact printing technique in which droplets of ink are ejected through a fine nozzle onto a substrate without bringing the nozzle into contact with the substrate.

The term "*organic substrate*" as used herein encompasses all organic substrates of natural or synthetic origin. The term "*organic*" is used within the subject application within its broadest meaning and refers to any substrate on the basis of a material containing carbon. The substrate can be present in the form of fibers comprising or consisting of natural or synthetic polyamides (for example wool, silk and all nylon types), polyurethanes, or cellulose (for example paper).

Further examples for the form/appearance of the substrate are yarn, woven fabric, loop-formingly knitted fabric carpet comprising or consisting of an organic substrate, e.g. natural or synthetic polyamides (for example wool, silk and all nylon types), polyurethanes, or cellulose.

Fully fashioned dyeings are even permanently possible on delicate substrates, examples being lambswool, cashmere, alpaca and mohair. The compound of formula (I) according to the invention is particularly useful for dyeing fine-denier fibres, or micro fibres.

The compound of formula (I) according to the invention and its salts are particularly suitable for dyeing or printing fibrous material containing or consisting of natural or synthetic polyamides in yellow to yellowish orange shades. The compound of formula (I) according to the invention and its salts are suitable for producing inkjet printing inks and for using these inkjet printing inks to print organic substrates, such as e.g. fibrous material which consists of or comprise natural or synthetic polyamides or cellulose, for example paper.

Dyeing is carried out as per known processes, see for example the dyeing processes described in Ullmanns Enzyklopädie der technischen Chemie, 4th Edition, 1982, Volume 22, pages 658-673 or in the book by M. Peter and H. K. Rouette, Grundlagen der Textilveredlung, 13th Edition, 1989, pages 535-556 and 566-574. Preference is given to dyeing in the exhaust process at a temperature ranging from 30 to 140°C, e.g. at a temperature ranging from 80 to 120°C or at a temperature ranging from 80 to 100°C, and at a liquor ratio ranging from 3:1 to 40:1.

The term "*exhaust dyeing process*" as used herein is to be understood as a process in which the dye is gradually transferred from a relatively large volume dyebath to the organic substrate being dyed over a relatively long period of time (see A Review of Textile Dyeing Processes, Perkins W. S, 1991. Textile Chemist & Colorist vol. 23(8) 23-27).

The term *"continuous dyeing process"* as used herein is to be understood as a process in which the substrate to be dyed is fed continuously into a dye range. Examples of a continuous dyeing process are pad-steam process or pad-dry process.

The compound of formula (I) according to the invention, when being applied to an organic substrate, such as e.g. natural or synthetic polyamides and polyurethanes exhibits good light and wet/wash fastness and is free of photochromic behavior.

Furthermore, the compound of formula (I) according to the invention shows a high build-up behavior on the organic substrate, e.g. when being present in the form of a fiber.

The compound of formula (I) according to the invention and its salts are highly compatible with known acid dyes. Accordingly, the compound of formula (I), or its salts can be used alone in a dyeing process or else as a component in a combination shade dyeing composition together with other acid dyes of the same class, i.e. with acid dyes possessing comparable dyeing properties, such as for example fastness properties and exhaustion rates from the dyebath onto the substrate.

The ratio in which the compound of formula (I) according to the invention is present in a combination shade dyeing composition is dictated by the hue to be obtained.

The compound of formula (I) according to the invention, as stated above, is very useful for dyeing and/or printing natural and synthetic polyamides, for example wool, silk, all nylon types, and cellulose (e.g. paper), on each of which dyeings and printings having a high fastness level, especially good light fastness and good wet/wash fastness (washing, alkaline perspiration) are obtained. The compound of formula (I) according to the invention and its salts has a high rate of exhaustion. The ability of the compound of formula (I) according to the invention and its salts to build up is likewise very good. On-tone dyeings on the identified substrates are of outstanding quality. All dyeings and printings moreover have a constant hue under artificial light. Furthermore, the fastness of the compound of formula (I) according to the invention to decating and boiling is good.

One decisive advantage of the compound of formula (I) according to invention is that it is metal free and provides very level dyeings and printings.

The compound of formula (I) according to the invention can be used as an individual dye or else, owing to its good compatibility, as a combination element with other dyes of the same class having comparable dyeing and printing properties, for example with regard to general fastness, exhaustion value, etc. The combination shade dyeings obtained have similar fastness to dyeings with the individual dye.

For example, the compound of formula (I) according to the invention is in particular suitable to be applied as yellow orange elements together with red dyes described in, for example, WO 2007/115960 A1, and together with navy blue/black dyes described in, for example, WO 2013/056838 A1, in trichromatic dyeings and printings that are free from heavy metals and that have light and wet/wash fastness.

For all of the above purposes, the compound of formula (I) according to the invention, wherein R1 and R2 are hydrogen, R3 is -CH₃, R4 and R5 are -CH₂CH₃ and R6 and R7 are hydrogen, and wherein the -SO₃H groups are in *ortho*-position to the azo groups and in para position to R₁, and wherein the CHR₇-group is in *para* position to the azo groups is particularly well suited.

As becomes apparent from the above, the compounds as disclosed herein may be used for the preparation of a printing ink or a dyeing solution.

Thus, the present invention also relates to a printing ink or a dyeing solution comprising at least one compound as disclosed herein.

In a **fourth aspect,** the invention relates to an organic substrate, obtainable by a process for dyeing and/or printing an organic substrate comprising the contacting of at least one compound of formula (I) according to the invention with said organic substrate, which may for example be a fine dernier fiber material, or a micro fiber.

The diamine of formula (II) can be prepared from two equivalents of a compound of formula (IV) and one equivalent of an aldehyde of formula (V) under conventional conditions:

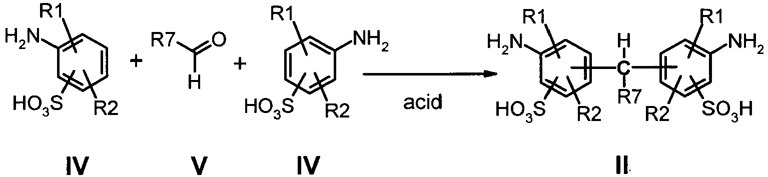

If R7 is hydrogen, instead of formaldehyde (CAS registry No.: [50-00-0]) another formaldehyde source can be used in the condensation reaction, for example paraformaldehyde (CAS registry No: [30525-89-4]), 1,3,5-trioxane (CAS registry No: [100-88-3]) or hexamethylenetetramine (urotropine) (CAS registry No: [100-97-0]).

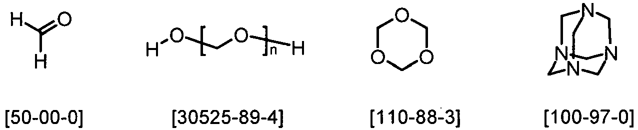

A compound of formula (II), wherein R7 is hydrogen and the -SO₃H groups are in *ortho*-position to the NH₂-group is known from WO 2010/010032.

### Examples

In the following examples, parts and percentages are indicated by weight and temperatures are indicated in degrees Celsius.

### Example 1 a

38 parts of 2-aminobenzenesulfonic acid (CAS registry No.: [88-21-1]) are suspended in 145 parts of water and mixed with 63 parts of concentrated hydrochloric acid. Then 9 parts of a formaldehyde solution (CAS registry No.: [50-00-0]) are added dropwise. The resulting mixture is heated to 95°C and stirred for 5 hours at 95°C. After filtration and drying 32 parts of a mixture of isomers of the following formula are obtained:

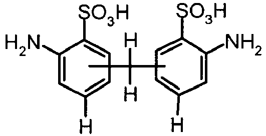

### Example 1 b

38 parts of 2-aminobenzenesulfonic acid (CAS registry No.: [88-21-1]) are suspended in 240 parts of water and mixed with 69 parts of concentrated hydrochloric acid. Then 3.5 parts of s-trioxane (CAS registry No.: [110-88-3]) are added. The resulting mixture is heated to 85°C and stirred for 2 hours at 85°C. After filtration and drying 32 parts of a mixture of isomers of the following formula are obtained:

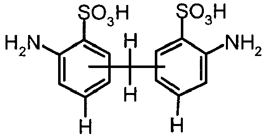

### Example 1 c

35 parts of 2-aminobenzenesulfonic acid (CAS registry No.: [88-21-1]) are suspended in 210 parts of water and mixed with 59 parts of concentrated hydrochloric acid. Then 3.1 parts of paraformaldehyde (CAS registry No: [30525-89-4]) are added. The resulting mixture is heated to 90°C and stirred for 15 hours at 90°C. After filtration and drying 32 parts of a mixture of isomers of the following formula are obtained:

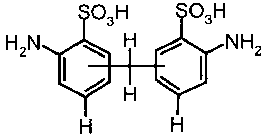

### Example 1d

39 parts of 2-aminobenzenesulfonic acid (CAS registry No.: [88-21-1]) are suspended in 210 parts of water and mixed with 59 parts of concentrated hydrochloric acid. Then 2.5 parts of hexamethylenetetramine (urotropine) (CAS registry No: [100-97-0]) are added. The resulting mixture is heated to 75°C and stirred for 20 hours at 75°C. After filtration and drying 32 parts of a mixture of isomers of the following formula are obtained:

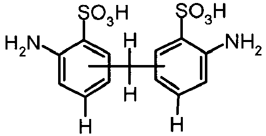

### Example 1 e

The product produced in Examples 1a, 1b, 1c or 1d is suspended in 450 parts of water and mixed with 27 parts of concentrated hydrochloric acid. After addition of 150 parts of ice, a yellowish suspension is formed. Diazotization is carried out by adding 37 parts of a 40% solution of sodium nitrite during one hour.

36.5 parts of 3-(diethylamino)acetanilide (CAS registry No.: [6375-46-8]) are dissolved in 360 parts of water at pH 4 and cooled down to 10°C in an ice bath. The resulting diazo suspension produced above is added dropwise during one hour, while the pH is maintained at 4 by dropwise adding of a 15% solution of soda. The suspension is stirred for 18 hours and filtrated afterwards. After drying 53 parts of a compound of the following formula is obtained, which has an absorption maximum (λₘₐₓ) at 472 nm and stains polyamide golden yellow: 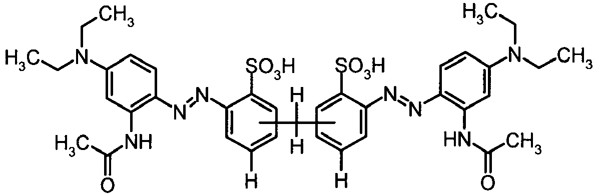 Within this example, which is obtained as a mixture of various isomers having the formula depicted hereinabove, the isomer, wherein the CH₂-group, which links the two azo compounds, is in para position to said azo groups is the predominant one.

### Examples 2 to 11

Using 3-dialkylamino carboxylic acid anilides as a coupling component other than the 3-(diethylamino)acetanilide used in Example 1e results in the following golden yellow to yellow orange dyes:

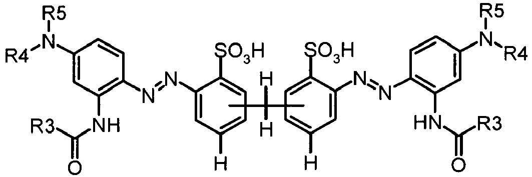

| Example | R3 | R4 | R5 | λₘₐₓ [nm] |
|---|---|---|---|---|
| 2 | -C₂H₅ | -C₂H₅ | -C₂H₅ | 473 |
| 3 | -CH₃ | -C₂H₅ | -CH₂C₆H₅ | 477 |
| 4 | -C₂H₅ | -C₃H₇ | -C₃H₇ | 475 |
| 5 | -CH₃ | -CH₂C₆H₅ | -CH₂C₆H₅ | 480 |
| 6 | -CH₃ | -C₄H₉ | -C₄H₉ | 478 |
| 7 | -CH₃ | -C₆H₁₃ | -C₆H₁₃ | 478 |
| 8 | -CHOCH₃ | -C₂H₅ | -C₂H₅ | 476 |
| 9 | -CH₂OC₆H₅ | -C₂H₅ | -C₂H₅ | 477 |
| 10 | -CH₃ | -C₂H₄OH | -C₂H₄OH | 480 |
| 11 | -CH₃ | -C₂H₄OH | -C₂H₄CN | 482 |

### Examples 12 to 14

Using 3-(dialkylamino)phenylurea as a coupling component instead of the 3-(diethylamino)acetanilide used in Example 1e results in the following golden yellow to yellow orange dyes:

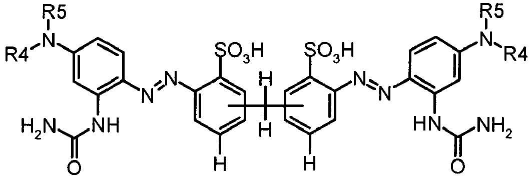

| Example | R4 | R5 | λₘₐₓ [nm] |
|---|---|---|---|
| 12 | -C₂H₅ | -C₂H₅ | 482 |
| 13 | -C₂H₅ | -CH₂C₆H₅ | 484 |
| 14 | -CH₂C₆H₅ | -CH₂C₆H₅ | 487 |

### Examples 15-25

Using 2-amino-4-methylbenzenesulfonic acid instead of 2-aminobenzenesulfonic acid to produce the diazo component according to Examples 1a to 1d and using different 3-dialkylamino carboxylic acid anilides as a coupling component results in the following golden yellow to yellow orange dyes:

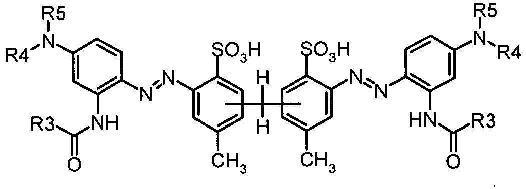

| Example | R3 | R4 | R5 | λₘₐₓ [nm] |
|---|---|---|---|---|
| 15 | -CH₃ | -C₂H₅ | -C₂H₅ | 480 |
| 16 | -C₂H₅ | -C₂H₅ | -C₂H₅ | 478 |
| 17 | -CH₃ | -C₂H₅ | -CH₂C₆H₅ | 481 |
| 18 | -C₂H₅ | -C₃H₇ | -C₃H₇ | 479 |
| 19 | -CH₃ | -CH₂C₆H₅ | -CH₂C₆H₅ | 484 |
| 20 | -CH₃ | -C₄H₉ | -C₄H₉ | 483 |
| 21 | -CH₃ | -C₆H₁₃ | -C₆H₁₃ | 480 |
| 22 | -CHOCH₃ | -C₂H₅ | -C₂H₅ | 482 |
| 23 | -CH₂OC₆H₅ | -C₂H₅ | -C₂H₅ | 483 |
| 24 | -CH₃ | -C₂H₄OH | -C₂H₄OH | 481 |
| 25 | -CH₃ | -C₂H₄OH | -C₂H₄CN | 483 |

### Examples 26-28

Using 3-(dialkylamino)phenylurea instead of 3-(diethylamino)acetanilide used in Example 15 as coupling component results in the following golden yellow to yellow orange dyes:

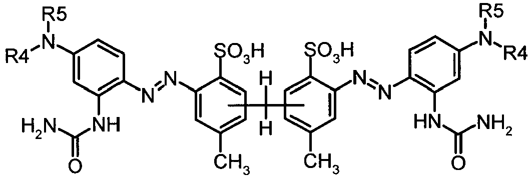

| Example | R4 | R5 | λₘₐₓ [nm] |
|---|---|---|---|
| 26 | -C₂H₅ | -C₂H₅ | 486 |
| 27 | -C₂H₅ | -CH₂C₆H₅ | 485 |
| 28 | -CH₂C₆H₅ | -CH₂C₆H₅ | 488 |

### Examples 29-39

Using 2-amino-4-chlorobenzenesulfonic acid instead of 2-aminobenzenesulfonic acid to produce the diazo component according to Examples 1a to 1d and using different 3-dialkylamino carboxylic acid anilides as a coupling component results in the following orange dyes:

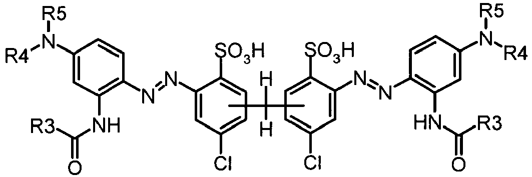

| Example | R3 | R4 | R5 | λₘₐₓ [nm] |
|---|---|---|---|---|
| 29 | -CH₃ | -C₂H₅ | -C₂H₅ | 489 |
| 30 | -C₂H₅ | -C₂H₅ | -C₂H₅ | 489 |
| 31 | -CH₃ | -C₂H₅ | -CH₂C₆H₅ | 490 |
| 32 | -C₂H₅ | -C₃H₇ | -C₃H₇ | 488 |
| 33 | -CH₃ | -CH₂C₆H₅ | -CH₂C₆H₅ | 490 |
| 34 | -CH₃ | -C₄H₉ | -C₄H₉ | 486 |
| 35 | -CH₃ | -C₆H₁₃ | -C₆H₁₃ | 490 |
| 36 | -CHOCH₃ | -C₂H₅ | -C₂H₅ | 492 |
| 37 | -CH₂OC₆H₅ | -C₂H₅ | -C₂H₅ | 492 |
| 38 | -CH₃ | -C₂H₄OH | -C₂H₄OH | 493 |
| 39 | -CH₃ | -C₂H₄OH | -C₂H₄CN | 494 |

### Examples 40-42

Using 3-(dialkylamino)phenylurea instead of 3-(diethylamino)acetanilide used in Example 29 as coupling component results in the following orange dyes:

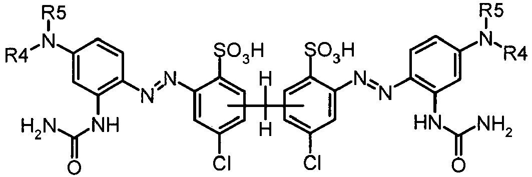

| Example | R4 | R5 | λₘₐₓ [nm] |
|---|---|---|---|
| 40 | -C₂H₅ | -C₂H₅ | 495 |
| 41 | -C₂H₅ | -CH₂C₆H₅ | 495 |
| 42 | -CH₂C₆H₅ | -CH₂C₆H₅ | 495 |

As already recited earlier herein, the compounds according to all these examples are obtained as mixtures of various isomers, wherein the position of the SO₃H group is ortho to the azo group and para to R1, with the position of the linking group CH2 being free, with the compound wherein the CH2 group is para to the azo groups being the predominant isomer.

### Use Example A

A dyebath at 40°C, consisting of 2000 parts of water, 1 part of a weakly cation-active levelling agent which is based on an ethoxylated aminopropyl fatty acid amide and which has affinity for dye, 0.25 parts of the compound of Example 1 e and adjusted to pH 5 with 1 to 2 parts of 40% acetic acid is entered with 100 parts of nylon-6 fabric. After 10 minutes at 40°C, the dyebath is heated to 98°C at a rate of 1°C per minute and then left at boiling temperature for 45 to 60 minutes. Thereafter it is cooled down to 70°C during 15 minutes. The dyeing is removed from the bath, rinsed with hot and then with cold water and dried. The result obtained is a golden yellow polyamide dyeing that has a good levelness, good light and wet/wash fastnesses and a good build-up behavior.

Use Example A was repeated using the compounds of Examples 2 to 42 with similar results regarding levelness, light and wet/wash fastnesses and build-up behavior.

### Use Example B

A dyebath at 40°C, consisting of 2000 parts of water, 1 part of a weakly cation-active levelling agent which is based on an ethoxylated aminopropyl fatty acid amide and which has affinity for dye, 0.3 parts of the compound of Example 1e and adjusted to pH 5.5 with 1 to 2 parts of 40% acetic acid is entered with 100 parts of nylon-6,6 fabric. After 10 minutes at 40°C, the dyebath is heated to 120°C at a rate of 1.5°C per minute and then left at 120°C for 15 to 25 minutes. Thereafter it is cooled down to 70°C during 25 minutes. The dyeing is removed from the bath, rinsed with hot and then with cold water and dried. The result obtained is a golden yellow polyamide dyeing that has a good levelness, good light and wet/wash fastnesses and a good build-up behavior.

Use Example B was repeated using the compounds of Examples 2 to 42 with similar results regarding levelness, light and wet/wash fastnesses and build-up behavior.

### Use Example C

A dyebath at 40°C, consisting of 4000 parts of water, 1 part of a weakly amphoteric levelling agent which is based on a sulfated ethoxylated fatty acid amide and which has affinity for dye, 0.4 parts of the compound of Example 1e and adjusted to pH 5 with 1 to 2 parts of 40% acetic acid is entered with 100 parts of wool fabric. After 10 minutes at 40°C, the dyebath is heated to boiling temperature at a rate of 1°C per minute and then left at boiling temperature for 40 to 60 minutes. Thereafter it is cooled down to 70°C during 20 minutes. The dyeing is removed from the bath, rinsed with hot and then with cold water and dried. The result obtained is a golden yellow wool dyeing that has a good levelness, good light and wet/wash fastnesses and a good build-up behavior.

Use Example C was repeated using the compounds of Examples 2 to 42 with similar results regarding levelness, light and wet/wash fastnesses and buid-up behavior.

### Use Example D

100 parts of a woven nylon-6 material are padded with a 50°C liquor consisting of
- 40: parts of the compound of Example 1e,
- 100: parts of urea,
- 20: parts of a non-ionic solubilizer based on butyldiglycol,
- 15-20: parts of acetic acid (to adjust the pH to 4),
- 10: parts of a weakly cation-active levelling agent which is based on an ethoxylated aminopropyl fatty acid amide and has affinity for dye, and
- 810-815: parts of water (to make up to 1000 parts of padding liquor).

The material thus impregnated is rolled up and left to dwell in a steaming chamber under saturated steam conditions at 85 to 98°C for 3 to 6 hours for fixation. The dyeing is then rinsed with hot and cold water and dried. The result obtained is a golden yellow nylon dyeing that has a good levelness, good light and wet/wash fastness and a good build-up behavior.

Use Example D was repeated using the compounds of Examples 2 to 42 with similar results regarding levelness, light and wet/wash fastness and build-up behavior.

### Use Example E

A textile cut pile sheet material composed of nylon-6 and having a synthetic base fabric is padded with a liquor containing per 1000 parts
- 1: part of the compound of Example 1 e,
- 4: parts of a commercially available thickener based on carob flour ether,
- 2: parts of a non-ionic ethylene oxide adduct of a higher alkylphenol,
- 1: part of 60% acetic acid.

This is followed by printing with a paste which contains the following components per 1000 parts:
- 20: parts of commercially available alkoxylated fatty alkylamine (displace product),
- 20: parts of a commercially available thickener based on carob flour ether.

The print is fixed for 6 minutes in saturated steam at 100°C, rinsed and dried. The result obtained is a level-coloured cover material having a golden yellow and white pattern.

Use Example E was repeated using the compounds of Examples 2 to 42 with similar results regarding levelness, light and wet/wash fastnesses and build-up behavior.

### Use Example F

3 parts of the compounds of Examples 1 to 42 are dissolved in 82 parts of demineralized water and 15 parts of diethylene glycol at 60°C. Cooling down to room temperature gives a yellow brown printing ink which is very highly suitable for inkjet printing on paper or polyamide and wool textiles.

### Use Example G

A dyebath at 40°C, consisting of
- 2000: parts of water,
- 1: parts of a weakly cation-active levelling agent which is based on an ethoxylated aminopropyl fatty acid amide and has affinity for dye,
- 0.3: parts of dye of Example 1 e,
- 0.3: parts of a red dye according to Example 2 of WO 2007/115960,
- 0.3: parts of a red dye according to Example 1 of WO 2013/056838
and adjusted to pH 5.5 with 1 to 2 parts of 40% acetic acid is entered with 100 parts of nylon-6,6 fabric. After 10 minutes at 40°C, the dyebath is heated to 120°C at a rate of 1.5°C per minute and then left at 120°C for 15 to 25 minutes. Thereafter it is cooled down to 70°C during 25 minutes. The dyeing is removed from the bath, rinsed with hot and then with cold water and dried. The result obtained is an olive coloured polyamide dyeing that has a good levelness, good light and wet/wash fastnesses and a good build-up behavior.

## Claims

1. A Compound of the general formula (I) 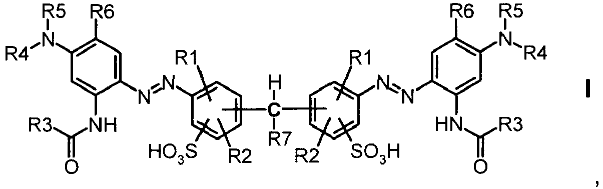 wherein
R1 is hydrogen, unsubstituted or substituted, linear or branched C₁₋₁₂ alkyl, unsubstituted or substituted, linear or branched C₁₋₁₂ alkoxy, unsubstituted or substituted aryl or halogen,
R2 is hydrogen, unsubstituted or substituted, linear or branched C₁₋₁₂ alkyl,
R3 is unsubstituted or substituted, linear or branched C₁₋₁₂ alkyl, unsubstituted or substituted, linear or branched C₁₋₁₂ alkoxy, unsubstituted or substituted aryl or NR8R9,
R4, R5 are unsubstituted or substituted, linear or branched C₁₋₁₂ alkyl, unsubstituted or substituted, linear or branched C₁₋₁₂ alkenyl, unsubstituted or substituted, linear or branched C₁₋₁₂ alkoxy, unsubstituted or substituted aryl, 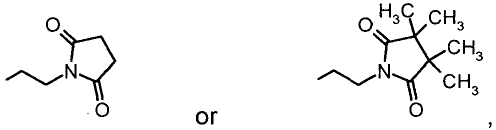
R6 is hydrogen, unsubstituted or substituted, linear or branched C₁₋₁₂ alkyl, unsubstituted or substituted, linear or branched C₁₋₁₂ alkoxy,
R7 is hydrogen, unsubstituted or substituted, linear or branched C₁₋₁₂ alkyl,
R8, R9 are independently hydrogen or defined as R4 and R5, wherein within the compound of formula (I) the SO₃H group can be the free acid, a salt or a mixed salt.

2. A compound according to claim 1, wherein the substituents of the substituted alkyl, alkenyl, alkoxy and aryl groups are independently selected from the group consisting of halogen, -OH, -COOH, -CN, -SO₃H, aryl, aryloxy, -O(C₁₋₄ alkyl), -O(C₁₋₄ alkoxy), -CO-O-C₁₋₄ alkyl, -O-CO-C₁₋₄ alkyl, -O-CO-aryl, -CO-(O-CH₂-CH₂)ₙ-O-C₁₋₄ alkyl, wherein n is from 1 to 10, C₁₋₄ alkenyl, C₁₋₄ alkynyl, -NRₓR_{y}, wherein Rₓ and R_{y} are independently hydrogen or C₁₋₄ alkyl.

3. A compound according to claim 1 or 2, wherein the -SO₃H groups are in *ortho-*position to the azo groups.

4. A compound according to according to any of the preceding claims, wherein
R1 is hydrogen, unsubstituted or substituted, linear or branched C₁₋₆ alkyl, unsubstituted or substituted, linear or branched C₁₋₆ alkoxy or halogen,
R2 is hydrogen or unsubstituted or substituted, linear or branched C₁₋₁₂ alkyl,
R3 is unsubstituted or substituted, linear or branched C₁₋₁₂ alkyl, unsubstituted or substituted, linear or branched C₁₋₁₂ alkoxy, unsubstituted or substituted aryl or NH₂,
R4, R5 are unsubstituted or substituted, linear or branched C₁₋₁₂ alkyl, unsubstituted or substituted, linear or branched C₁₋₁₂ alkenyl, unsubstituted or substituted, linear or branched C₁₋₁₂ alkoxy, unsubstituted or substituted aryl, 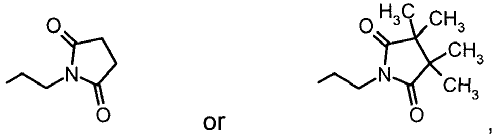
R6 is hydrogen, unsubstituted or substituted, linear or branched C₁₋₆ alkyl, unsubstituted or substituted, linear or branched C₁₋₆ alkoxy,
R7 is hydrogen, unsubstituted or substituted, linear or branched C₁₋₆ alkyl.

5. A compound according to any of the preceding claims, wherein
R1 is hydrogen, -CH₃, -Cl or -OCH₃,
R2 is hydrogen or -CH₃,
R3 is -CH₃, -CH₂CH₃, -CH₂CH₂CH₃, -C₆H₅, -C₆H₄CH₃, -CH₂CH₂Cl, -CH₂OCH₃, -CH₂OCH₂CH₃, -CH₂OH, -CH₂OC₆H₅, -OCH₃, -OCH₂CH₃, -OCH₂CH₂CH₃, -OCH₂CH₂OCH₂CH₃, -OCH₂CH₂CH₂CH₂CH₃, -OCH₂CH(CH₂CH₃)CH₂CH₂CH₂CH₃, -OC₁₀H₂₁, -OC₁₂H₂₅ or NH₂,
R4, R5 are -CH₃, -CH₂CH₃, -CH₂C₆H₅, -CH₂CH₂CH₃, -CH₂CH₂CH₂CH₃, -CH₂CH₂CH₂CH₂CH₃, -CH₂CH₂CH₂CH₂CH₂CH₂CH₃, CH₂CH₂OH, -CH₂CH(OH)CH₂CH₃, -CH₂CH=CH₂, -CH₂CH₂C≡N, -CH₂CH₂COOCH₂CH₂OCH₃, -CH₂CH₂COOCH₃, -CH₂CH₂OCH₂CH₂OCH₃, -CH₂CH₂OCOCH₂CH₃, -CH₂CH₂OCOC₆H₅, -CH₂CH₂OCOCH₃, -CH₂COOCH₃, -CH₂CH₂CH₂CH₂CH₂CH₂CH₃, 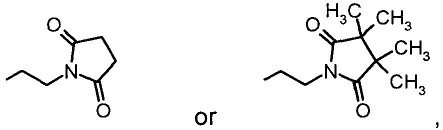
R6 is hydrogen, -CH₃, -CH₂CH₃, -CH₂CH₂OH, -OCH₃, -OCH₂CH₃ or -OCH₂C₆H₅,
R7 is hydrogen, -CH₃ or -CH₂CH₃.

6. A compound according to according to any of the preceding claims, wherein
R1 is hydrogen, -CH₃, -Cl or -OCH₃,
R2 is hydrogen or -CH₃,
R3 is -CH₃, -CH₂CH₃, -CH₂CH₂CH₃, -C₆H₅, -C₆H₄CH₃, -CH₂CH₂Cl, -CH₂OCH₃, -CH₂OCH₂CH₃, -CH₂OH, -CH₂OC₆H₅, -OCH₃, -OCH₂CH₃, -OCH₂CH₂CH₃, -OCH₂CH₂OCH₂CH₃, -OCH₂CH₂CH₂CH₂CH₃, -OCH₂CH(CH₂CH₃)CH₂CH₂CH₂CH₃, -OC₁₀H₂₁, -OC₁₂H₂₅ or NH₂,
R4, R5 are -CH₃, -CH₂CH₃, -CH₂C₆H₅, -CH₂CH₂CH₃, -CH₂CH₂CH₂CH₃, -CH₂CH₂CH₂CH₂CH₃, -CH₂CH₂CH₂CH₂CH₂CH₂CH₃, CH₂CH₂OH, -CH₂CH(OH)CH₂CH₃, -CH₂CH=CH₂, -CH₂CH₂C≡N, -CH₂CH₂COOCH₂CH₂OCH₃, -CH₂CH₂COOCH₃, -CH₂CH₂OCH₂CH₂OCH₃, -CH₂CH₂OCOCH₂CH₃, -CH₂CH₂OCOC₆H₅, -CH₂CH₂OCOCH₃, -CH₂COOCH₃, -CH₂CH₂CH₂CH₂CH₂CH₂CH₃, 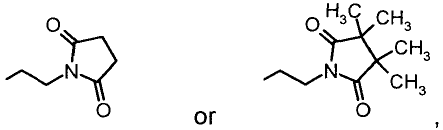
R6 is hydrogen, -CH₃, -CH₂CH₃, -CH₂CH₂OH, -OCH₃, -OCH₂CH₃ or -OCH₂C₆H₅,
R7 is hydrogen.

7. A compound according to any of the preceding claims, wherein
R1 is hydrogen, -CH₃, -Cl or -OCH₃,
R2 is hydrogen,
R3 is C₁₋₃ alkyl or -NH₂,
R4, R5 are unsubstituted or substituted linear C₂₋₆ alkyl or benzyl,
R6 is hydrogen, -CH₃, -CH₂CH₃, -CH₂CH₂OH, -OCH₃, -OCH₂CH₃ or -OCH₂C₆H₅,
R7 is hydrogen.

8. A compound according to any of the preceding claims, wherein
R1 is hydrogen, -CH₃ or -Cl,
R2 is hydrogen,
R3 is -CH3, -CH₂CH₃ or -NH₂,
R4, R5 are unsubstituted or substituted linear C₂₋₆ alkyl or benzyl,
R6, R7 are hydrogen.

9. A compound according to any of the preceding claims, wherein
R1, R2 are hydrogen,
R3 is -CH₃,
R4, R5 are unsubstituted or substituted linear C₂₋₆ alkyl or benzyl,
R6, R7 are hydrogen.

10. A compound according to any of the preceding claims, wherein said compound is present in the form of a mixture of two or more isomers, with the isomer having the following stereochemical structure being the predominant one:
- the -SO₃H groups are in *ortho* position to the azo groups; or
- the -SO₃H groups are in *ortho*-position to the azo groups, and the -SO₃H groups are in para-position to R₁; or
- the -SO₃H groups are in *ortho*-position to the azo groups, and the CHR₇ group are in *para* position to the azo groups; or
- the -SO₃H groups are in *ortho* position to the azo groups, and the CHR₇-group is in *para* position to the azo groups, and the -SO₃H groups are in *para* position relative to R₁.

11. Process for the manufacture of a compound of formula (I) according to any of the preceding claims, wherein both amine functions of a compound of formula (II) 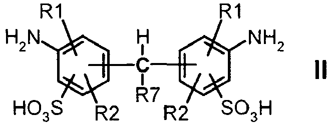 are diazotized and coupled onto totally two equivalents of a compound of formula (III), 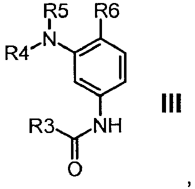 wherein R1 to R7 are as defined in claim 1, wherein within the compound of formula (I) the SO₃H group can be the free acid, a salt or a mixed salt.

12. Process for dyeing and/or printing an organic substrate comprising the contacting of at least one compound of formula (I) according to any of claims 1 to 10 or as produced according to claim 11 with said organic substrate, which may e.g. be a fine dernier fiber material or micro fiber.

13. Process for dyeing according to claim 12, which is an exhaust dyeing process or a continuous dyeing process, e.g. a pad steam process.

14. Process according to claims 12 or 13, wherein said organic substrate is paper, fibrous material comprising or consisting of natural and synthetic polyamides, polyurethane, or mixtures thereof.

15. Printing ink or dyeing solution comprising at least one compound as claimed in at least one of the claims 1 to 10, or manufactured according to claim 11.

16. Organic substrate obtainable by a process for dyeing and/or printing comprising contacting of at least one compound of formula (I) as claimed in at least one of the claims 1 to 10 or as manufactured according to claim 11 with the organic substrate.

17. Organic substrate according to claim 16, wherein the organic substrate is a fine dernier fiber material or a micro fiber.

## Patentansprüche

1. Eine Verbindung der allgemeinen Formel (I) 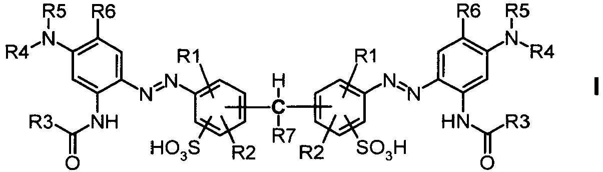 wobei
R1 Wasserstoff, unsubstituiertes oder substituiertes, lineares oder verzweigtes C₁₋₁₂ Alkyl, unsubstituiertes oder substituiertes, lineares oder verzweigtes C₁₋₁₂ Alkoxy, unsubstituiertes oder substituiertes Aryl oder Halogen ist,
R2 Wasserstoff, unsubstituiertes oder substituiertes, lineares oder verzweigtes C₁₋₁₂ Alkyl ist,
R3 unsubstituiertes oder substituiertes, lineares oder verzweigtes C₁₋₁₂ Alkyl, unsubstituiertes oder substituiertes, lineares oder verzweigtes C₁₋₁₂ Alkoxy, unsubstituiertes oder substituiertes Aryl oder NR₈R₉ ist,
R4, R5 unsubstituiertes oder substituiertes, lineares oder verzweigtes C₁₋₁₂ Alkyl, unsubstituiertes oder substituiertes, lineares oder verzweigtes C₁₋₁₂ Alkenyl, unsubstituiertes oder substituiertes, lineares oder verzweigtes C₁₋₁₂ Alkoxy, unsubstituiertes oder substituiertes Aryl, 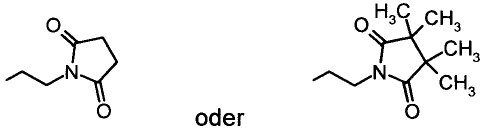 sind,
R6 Wasserstoff, unsubstituiertes oder substituiertes, lineares oder verzweigtes C₁₋₁₂ Alkyl, unsubstituiertes oder substituiertes, lineares oder verzweigtes C₁₋₁₂ Alkoxy ist,
R7 Wasserstoff, unsubstituiertes oder substituiertes, lineares oder verzweigtes C₁₋₁₂ Alkyl ist
R8, R9 unabhängig voneinander Wasserstoff sind oder definiert sind als R4 oder R5, wobei die SO₃H Gruppe in der Verbindung nach Formel (I) als freie Säure, als Salz oder als gemischtes Salz vorliegen kann.

2. Eine Verbindung nach Anspruch 1, wobei die Substituenten der substituierten Alkyl-, Alkenyl-, Alkoxy- und Arylgruppen unabhängig voneinander aus der Gruppe ausgewählt sind, bestehend aus Halogen, -OH, -COOH, -CN, -SO₃H, Aryl, Aryloxy, -O(C₁₋₄ Alkyl), -O(C₁₋₄ Alkoxy), -CO-O-C₁₋₄ Alkyl, -O-CO-C₁₋₄ Alkyl, -O-CO-Aryl, -CO-(O-CH₂-CH₂)ₙ-O-C₁₋₄ Alkyl, wobei n von 1 bis 10 ist, C₁₋₄ Alkenyl, C₁₋₄ Alkynyl, -NRₓR_{y}, wobei Rₓ und R_{y} unabhängig voneinander Wasserstoff oder C₁₋₄ Alkyl sind.

3. Eine Verbindung nach Anspruch 1 oder 2, wobei die -SO₃H Gruppen in *ortho-*Stellung zu den Azogruppen sind.

4. Eine Verbindung nach einem der vorhergehenden Ansprüche, wobei
R1 Wasserstoff, unsubstituiertes oder substituiertes, lineares oder verzweigtes C₁₋₆ Alkyl, unsubstituiertes oder substituiertes, lineares oder verzweigtes C₁₋₆ Alkoxy oder Halogen ist,
R2 Wasserstoff oder unsubstituiertes oder substituiertes, lineares oder verzweigtes C₁₋₁₂ Alkyl ist,
R3 unsubstituiertes oder substituiertes, lineares oder verzweigtes C₁₋₁₂ Alkyl, unsubstituiertes oder substituiertes, lineares oder verzweigtes C₁₋₁₂ Alkoxy, unsubstituiertes oder substituiertes Aryl oder NH₂ ist,
R4, R5 unsubstituiertes oder substituiertes, lineares oder verzweigtes C₁₋₁₂ Alkyl, unsubstituiertes oder substituiertes, lineares oder verzweigtes C₁₋₁₂ Alkenyl, unsubstituiertes oder substituiertes, lineares oder verzweigtes C₁₋₁₂ Alkoxy, unsubstituiertes oder substituiertes Aryl, 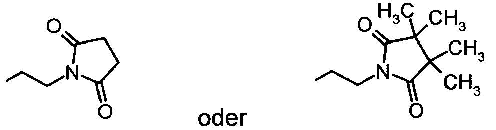 sind,
R6 Wasserstoff, unsubstituiertes oder substituiertes, lineares oder verzweigtes C₁₋₆ Alkyl, unsubstituiertes oder substituiertes, lineares oder verzweigtes C₁₋₆ Alkoxy ist,
R7 Wasserstoff, unsubstituiertes oder substituiertes, lineares oder verzweigtes C₁₋₆ Alkyl ist.

5. Eine Verbindung nach einem der vorhergehenden Ansprüche, wobei
R1 Wasserstoff, -CH₃, -Cl, oder -OCH₃ ist,
R2 Wasserstoff oder -CH₃ ist,
R3 -CH₃, -CH₂CH₃, -CH₂CH₂CH₃, -C₆H₅, -C₆H₄CH₃, -CH₂CH₂Cl, -CH₂OCH₃, -CH₂OCH₂CH₃, -CH₂OH, -CH₂OC₆H₅, -OCH₃, -OCH₂CH₃, -OCH₂CH₂CH₃, -OCH₂CH₂OCH₂CH₃, -OCH₂CH₂CH₂CH₂CH₃, -OCH₂CH(CH₂CH₃)CH₂CH₂CH₂CH₃, -OC₁₀H₂₁, -OC₁₂H₂₅ oder NH₂ ist,
R4, R5 -CH₃, -CH₂CH₃, -CH₂C₆H₅, -CH₂CH₂CH₃, -CH₂CH₂CH₂CH₃, -CH₂CH₂CH₂CH₂CH₃, -CH₂CH₂CH₂CH₂CH₂CH₂CH₃, CH₂CH₂OH, -CH₂CH(OH)CH₂CH₃, -CH₂CH=CH₂, -CH₂CH₂C≡N, -CH₂CH₂COOCH₂CH₂OCH₃, -CH₂CH₂COOCH₃, -CH₂CH₂OCH₂CH₂OCH₃, -CH₂CH₂OCOCH₂CH₃, -CH₂CH₂OCOC₆H₅, -CH₂CH₂OCOCH₃, -CH₂COOCH₃, -CH₂CH₂CH₂CH₂CH₂CH₂CH₃, 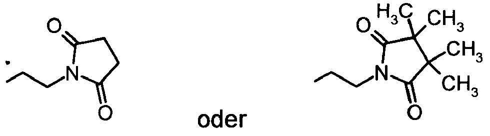 sind,
R6 Wasserstoff, -CH₃, -CH₂CH₃, -CH₂CH₂OH, -OCH₃, -OCH₂CH₃ oder -OCH₂C₆H₅ ist,
R7 Wasserstoff, -CH₃ oder -CH₂CH₃.

6. Eine Verbindung nach einem der vorhergehenden Ansprüche, wobei
R1 Wasserstoff, -CH₃, -Cl oder -OCH₃ ist,
R2 Wasserstoff oder -CH₃ ist,
R3 -CH₃, -CH₂CH₃, -CH₂CH₂CH₃, -C₆H₅, -C₆H₄CH₃, -CH₂CH₂Cl, -CH₂OCH₃, -CH₂OCH₂CH₃, -CH₂OH, -CH₂OC₆H₅, -OCH₃, -OCH₂CH₃, -OCH₂CH₂CH₃, -OCH₂CH₂OCH₂CH₃, -OCH₂CH₂CH₂CH₂CH₃, -OCH₂CH(CH₂CH₃)CH₂CH₂CH₂CH₃, -OC₁₀H₂₁, -OC₁₂H₂₅ oder NH₂ ist,
R4, R5 -CH₃, -CH₂CH₃, -CH₂C₆H₅, -CH₂CH₂CH₃, -CH₂CH₂CH₂CH₃, -CH₂CH₂CH₂CH₂CH₃, -CH₂CH₂CH₂CH₂CH₂CH₂CH₃, CH₂CH₂OH, -CH₂CH(OH)CH₂CH₃, -CH₂CH=CH₂, -CH₂CH₂C≡N, -CH₂CH₂COOCH₂CH₂OCH₃, -CH₂CH₂COOCH₃, -CH₂CH₂OCH₂CH₂OCH₃, -CH₂CH₂OCOCH₂CH₃, -CH₂CH₂OCOC₆H₅, -CH₂CH₂OCOCH₃, -CH₂COOCH₃, -CH₂CH₂CH₂CH₂CH₂CH₂CH₃, 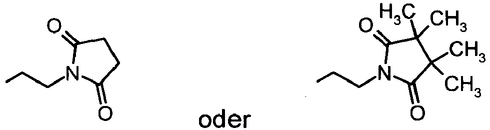 sind,
R6 Wasserstoff, -CH₃, -CH₂CH₃, -CH₂CH₂OH, -OCH₃, -OCH₂CH₃ oder -OCH₂C₆H₅ ist,
R7 Wasserstoff ist.

7. Eine Verbindung nach einem der vorhergehenden Ansprüche, wobei
R1 Wasserstoff, -CH₃, -Cl oder -OCH₃ ist,
R2 Wasserstoff ist,
R3 C₁₋₃ Alkyl oder -NH₂ ist,
R4, R5 unsubstituiertes oder substituiertes lineares C₂₋₆ Alkyl oder Benzyl sind,
R6 Wasserstoff, -CH₃, -CH₂CH₃, -CH₂CH₂OH, -OCH₃, -OCH₂CH₃ oder -OCH₂C₆H₅ ist
R7 Wasserstoff ist.

8. Eine Verbindung nach einem der vorhergehenden Ansprüche, wobei
R1 Wasserstoff, -CH₃ oder -Cl ist,
R2 Wasserstoff ist,
R3 -CH₃, -CH₂CH₃ oder -NH₂ ist,
R4, R5 unsubstituiertes oder substituiertes lineares C₂₋₆ Alkyl oder Benzyl sind,
R6, R7 Wasserstoff sind.

9. Eine Verbindung nach einem der vorhergehenden Ansprüche, wobei
R1, R2 Wasserstoff sind,
R3 -CH₃ ist,
R4, R5 unsubstituiertes oder substituiertes lineares C₂₋₆ Alkyl oder Benzyl sind,
R6, R7 Wasserstoff sind.

10. Eine Verbindung nach einem der vorhergehenden Ansprüche, wobei die Verbindung in Form einer Mischung von zwei oder mehr Isomeren vorliegt, wobei das Isomer mit folgender stereochemischen Struktur das vorherrschende ist:
- Die -SO₃H Gruppen sind in *ortho*-Stellung zu den Azogruppen; oder
- Die -SO₃H Gruppen sind in *ortho*-Stellung zu den Azogruppen, und die -SO₃H Gruppen sind in para-Stellung zu R₁; oder
- Die -SO₃H Gruppen sind in *ortho*-Stellung zu den Azogruppen, und die CHR₇ Gruppen sind in para-Stellung zu den Azogruppen; oder
- Die -SO₃H Gruppen sind in *ortho*-Stellung zu den Azogruppen, und die CHR₇ Gruppe ist in para-Stellung zu den Azogruppen, und die -SO₃H Gruppen sind in para Stellung relativ zu R₁.

11. Verfahren zur Herstellung einer Verbindung der Formel (I) nach einem der vorhergehenden Ansprüchen, wobei beide Aminfunktionen einer Verbindung der Formel (II) 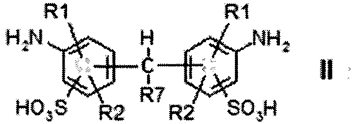 diazotiert und an insgesamt zwei Äquivalente einer Verbindung der Formel (III) gekuppelt werden, 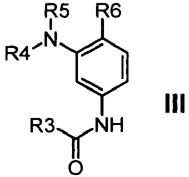 wobei R1 bis R7 wie in Anspruch 1 definiert sind, wobei die SO₃H Gruppe in der Verbindung nach Formel (I) als freie Säure, als Salz oder als gemischtes Salz vorliegen kann.

12. Verfahren zum Färben und/oder Bedrucken eines organischen Substrats aufweisend das Kontaktieren des besagten, organischen Substrats, welches beispielsweise ein Feindernier, Fasermaterial oder Mikrofaser ist, mit mindestens einer Verbindung der Formel (I) nach einem der Ansprüche 1 bis 10 oder wie hergestellt nach Anspruch 11.

13. Verfahren zum Färben nach Anspruch 12, welches ein Überschuss-Färbeverfahren oder ein kontinuierliches Färbeverfahren, z.B. ein Klotzfärbeverfahren ist.

14. Verfahren nach Ansprüchen 12 oder 13, wobei das genannte organische Substrat Papier ist, faseriges Material aufweisend oder bestehend aus natürlichen und synthetischen Polyamiden, Polyurethanen, oder Mischung davon.

15. Druckertinte oder Färbelösungen aufweisend mindestens eine Verbindung wie in mindestens einem der Ansprüche 1 bis 10 beansprucht, oder hergestellt nach Anspruch 11.

16. Organisches Substrat hergestellt durch ein Verfahren zum Färben und/oder Bedrucken aufweisend das Kontaktieren mindestens einer Verbindung der Formel (I) in mindestens einer der Ansprüche 1 bis 10 beansprucht oder hergestellt nach Anspruch 11, mit dem organischen Substrat.

17. Organisches Substrat nach Anspruch 16, wobei das organische Substrat ist ein Feindernier, Fasermaterial oder eine Mikrofaser ist.

## Revendications

1. Composé de formule générale (I) 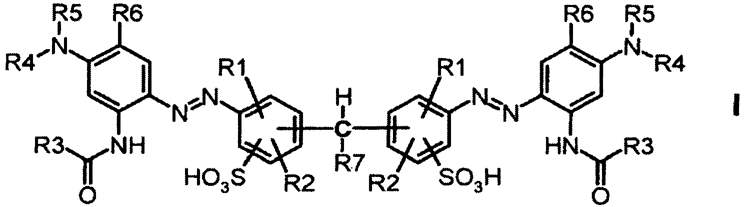 dans laquelle
R1 est un atome d'hydrogène, un alkyle de C₁ à C₁₂ linéaire ou ramifié, substitué ou non substitué, un alcoxy de C₁ à C₁₂ linéaire ou ramifié, substitué ou non substitué, un aryle substitué ou non substitué ou un atome d'halogène,
R2 est un atome d'hydrogène, un alkyle de C₁ à C₁₂ linéaire ou ramifié, substitué ou non substitué,
R3 est un alkyle de C₁ à C₁₂ linéaire ou ramifié, substitué ou non substitué, un alcoxy de C₁ à C₁₂ linéaire ou ramifié, substitué ou non substitué, un aryle substitué ou non substitué ou NR8R9,
R4, R5 sont un alkyle de C₁ à C₁₂ linéaire ou ramifié, substitué ou non substitué, un alcényle de C₁ à C₁₂ linéaire ou ramifié, substitué ou non substitué, un alcoxy de C₁ à C₁₂ linéaire ou ramifié, substitué ou non substitué, ou un aryle substitué ou non substitué, 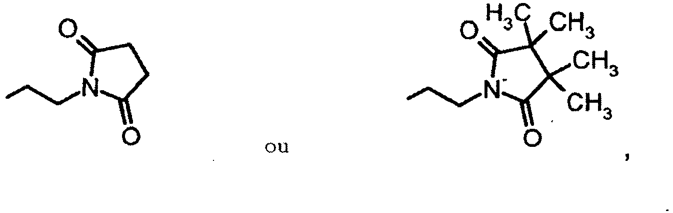
R6 est un atome d'hydrogène, un alkyle de C₁ à C₁₂ linéaire ou ramifié, substitué ou non substitué, un alcoxy de C₁ à C₁₂ linéaire ou ramifié, substitué ou non substitué,
R7 est un atome d'hydrogène, un alkyle de C₁ à C₁₂ linéaire ou ramifié, substitué ou non substitué,
R8, R9 sont indépendamment un atome d'hydrogène ou tels que définis en R4 et R5, où dans le composé de formule (I), le groupe SO₃H peut être l'acide libre, un sel ou un mélange de sels.

2. Composé selon la revendication 1, dans lequel les substituants des groupes alkyle, alcényle, alcoxy et aryle substitués sont indépendamment choisis dans le groupe constitué par un atome d'halogène, -OH, -COOH, -CN, -SO₃H, un aryle, aryloxy, -O(alkyle de C₁ à C₄), -O(alcoxy de C₁ à C₄),-CO-O-alkyle de C₁ à C₄, -O-CO-alkyle de C₁ à C₄, -O-CO-aryle,-CO-(O-CH₂-CH₂)ₙ-O-alkyle de C₁ à C₄, où n est de 1 à 10, un alcényle de C₁ à C₄, alcynyle de C₁ à C₄, -NRₓR_{y}, où Rₓ et R_{y} sont indépendamment un atome d'hydrogène ou un alkyle de C₁ à C₄.

3. Composé selon la revendication 1 ou 2, dans lequel les groupes -SO₃H sont en position *ortho* par rapport aux groupes azoïques.

4. Composé selon l'une quelconque des revendications précédentes, dans lequel
R1 est un atome d'hydrogène, un alkyle de C₁ à C₆ linéaire ou ramifié, substitué ou non substitué, un alcoxy de C₁ à C₆ linéaire ou ramifié, substitué ou non substitué ou un atome d'halogène,
R2 est un atome d'hydrogène ou un alkyle de C₁ à C₁₂ linéaire ou ramifié, substitué ou non substitué,
R3 est un alkyle de C₁ à C₁₂ linéaire ou ramifié, substitué ou non substitué, un alcoxy de C₁ à C₁₂ linéaire ou ramifié, substitué ou non substitué, un aryle substitué ou non substitué ou NH₂,
R4, R5 sont un alkyle de C₁ à C₁₂ linéaire ou ramifié, substitué ou non substitué, un alcényle de C₁ à C₁₂ linéaire ou ramifié, substitué ou non substitué, un alcoxy de C₁ à C₁₂ linéaire ou ramifié, substitué ou non substitué, ou un aryle substitué ou non substitué, 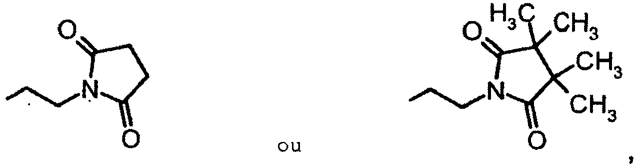
R6 est un atome d'hydrogène, un alkyle de C₁ à C₆ linéaire ou ramifié, substitué ou non substitué, un alcoxy de C₁ à C₆ linéaire ou ramifié, substitué ou non substitué,
R7 est un atome d'hydrogène, un alkyle de C₁ à C₆ linéaire ou ramifié, substitué ou non substitué.

5. Composé selon l'une quelconque des revendications précédentes, dans lequel
R1 est un atome d'hydrogène, -CH₃, -Cl ou -OCH₃,
R2 est un atome d'hydrogène ou -CH₃,
R3 est -CH₃, -CH₂CH₃, -CH₂CH₂CH₃, -C₆H₅, -C₆H₄CH₃, -CH₂CH₂Cl, -CH₂OCH₃, -CH₂OCH₂CH₃, -CH₂OH, -CH₂OC₆H₅, -OCH₃, -OCH₂CH₃, -OCH₂CH₂CH₃, -OCH₂CH₂OCH₂CH₃, -OCH₂CH₂CH₂CH₂CH₃, -OCH₂CH(CH₂CH3₎CH₂CH₂CH₂CH3, -OC₁₀H₂₁, -OC₁₂H₂₅ ou NH₂,
R4, R5 sont -CH₃, -CH₂CH₃, -CH₂C₆H₅, -CH₂CH₂CH₃, -CH₂CH₂CH₂CH₃, -CH₂CH₂CH₂CH₂CH₃, -CH₂CH₂CH₂CH₂CH₂CH₂CH₃, -CH₂CH₂OH, -CH₂CH (OH) CH₂CH₃, -CH₂CH=CH₂, -CH₂CH₂C≡N, -CH₂CH₂COOCH₂CH₂OCH₃, -CH₂CH₂COOCH₃, -CH₂CH₂OCH₂CH₂OCH₃, -CH₂CH₂OCOCH₂CH₃, -CH₂cH₂OCOC₆H₅, -CH₂CH₂OCOCH₃, -CH₂COOCH₃, -CH₂CH₂CH₂CH₂CH₂CH₂CH₃, 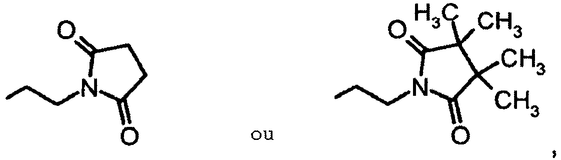
R6 est un atome d'hydrogène, -CH₃, -CH₂CH₃, -CH₂CH₂OH, -OCH₃, -OCH₂CH₃ ou -OCH₂C₆H₅,
R7 est un atome d'hydrogène, -CH₃ ou -CH₂CH₃.

6. Composé selon l'une quelconque des revendications précédentes, dans lequel
R1 est un atome d'hydrogène, -CH₃, -Cl ou -OCH₃,
R2 est un atome d'hydrogène ou -CH₃,
R3 est -CH₃, -CH₂CH₃, -CH₂CH₂CH₃, -C₆H₅, -C₆H₄CH₃, -CH₂CH₂Cl, -CH₂OCH₃, -CH₂OCH₂CH₃, -CH₂OH, -CH₂OC₆H₅, -OCH₃, -OCH₂CH₃, -OCH₂CH₂CH₃, -OCH₂CH₂OCH₂CH₃, -OCH₂CH₂CH₂CH₂CH₃, -OCH₂CH (CH₂CH₃) CH₂CH₂CH₂CH₃, -OC₁₀H₂₁, -OC₁₂H₂₅ ou NH₂,
R4, R5 sont -CH₃, -CH₂CH₃, -CH₂C₆H₅, -CH₂CH₂CH₃, -CH₂CH₂CH₂CH₃, -CH₂CH₂CH₂CH₂CH₃, -CH₂CH₂CH₂CH₂CH₂CH₂CH₃, -CH₂CH₂OH, -CH₂CH (OH) CH₂CH₃, -CH₂CH=CH₂, -CH₂CH₂C≡N, -CH₂CH₂COOCH₂CH₂OCH₃, -CH₂CH₂COOCH₃, -CH₂CH₂OCH₂CH₂OCH₃, -CH₂CH₂OCOCH₂CH₃, -CH₂CH₂OCOC₆H₅, -CH₂CH₂OCOCH₃, -CH₂COOCH₃, -CH₂CH₂CH₂CH₂CH₂CH₂CH₃, 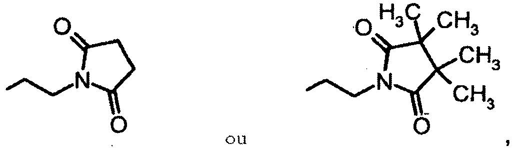
R6 est un atome d'hydrogène, -CH₃, -CH₂CH₃, -CH₂CH₂OH, -OCH₃, -OCH₂CH₃ ou -OCH₂C₆H₅,
R7 est un atome d'hydrogène.

7. Composé selon l'une quelconque des revendications précédentes, dans lequel
R1 est un atome d'hydrogène, -CH₃, -Cl ou -OCH₃,
R2 est un atome d'hydrogène,
R3 est un alkyle de C₁ à C₃ ou -NH₂.
R4, R5 sont un alkyle de C₂ à C₆ linéaire substitué ou non substitué ou un benzyle,
R6 est un atome d'hydrogène, -CH₃, -CH₂CH₃, -CH₂CH₂OH, -OCH₃, -OCH₂CH₃ ou -OCH₂C₆H₅,
R7 est un atome d'hydrogène.

8. Composé selon l'une quelconque des revendications précédentes, dans lequel
R1 est un atome d'hydrogène, -CH₃ ou -C1,
R2 est un atome d'hydrogène,
R3 est -CH₃, -CH₂CH₃ ou -NH₂,
R4, R5 sont un alkyle de C₂ à C₆ linéaire substitué ou substitué non ou un benzyle,
R6, R7 sont un atome d'hydrogène.

9. Composé selon l'une quelconque des revendications précédentes, dans lequel
R1, R2 sont un atome d'hydrogène,
R3 est -CH₃,
R4, R5 sont un alkyle de C₂ à C₆ linéaire substitué ou non substitué ou un benzyle,
R6, R7 sont un atome d'hydrogène.

10. Composé selon l'une quelconque des revendications précédentes, dans lequel ledit composé est présent sous la forme d'un mélange de deux ou plusieurs isomères, l'isomère ayant la structure stéréochimique suivante étant l'isomère prédominant :
- les groupes -SO₃H sont en position *ortho* par rapport aux groupes azoïques ; ou
- les groupes -SO₃H sont en position *ortho* par rapport aux groupes azoïques, et les groupes -SO₃H sont en position *para* par rapport à R₁ ; ou
- les groupes -SO₃H sont en position *ortho* par rapport aux groupes azoïques, et le groupe CHR₇ est en position *para* par rapport aux groupes azoïques ; ou
- les groupes -SO₃H sont en position *ortho* par rapport aux groupes azoïques, et le groupe CHR₇ est en position *para* par rapport aux groupes azoïques, et les groupes -SO₃H sont en position *para* par rapport à R₁.

11. Procédé de préparation d'un composé de formule (I) selon l'une quelconque des revendications précédentes, dans lequel les deux fonctions amine d'un composé de formule (II) 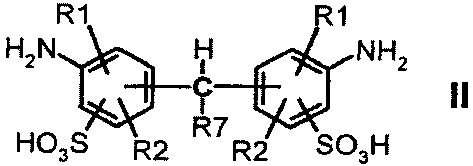 sont diazotées et couplées sur deux équivalents d'un composé de formule (III) au total, 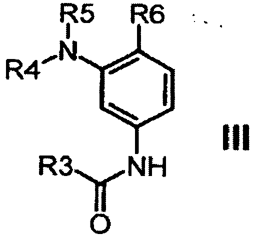 dans lequel R1 à R7 sont tels que définis dans la revendication 1, où dans le composé de formule (I), le groupe SO₃H peut être l'acide libre, un sel ou un mélange de sels.

12. Procédé de teinture et/ou d'impression d'un substrat organique comprenant la mise en contact d'au moins un composé de formule (I) selon l'une quelconque des revendications 1 à 10 ou tel que produit selon la revendication 11 avec ledit substrat organique, qui peut, par exemple, être une matière à base d'une fibre à fin denier ou une microfibre.

13. Procédé de teinture selon la revendication 12, qui est un procédé de teinture par épuisement ou un procédé de teinture continu, par exemple un procédé par foulardage de type pad-steam.

14. Procédé selon les revendications 12 ou 13, dans lequel ledit substrat organique est le papier, une matière fibreuse comprenant ou constituée par des polyamides naturels et synthétiques, un polyuréthanne, ou des mélanges de ceux-ci.

15. Encre d'impression ou solution de teinture comprenant au moins un composé selon au moins l'une des revendications 1 à 10, ou préparé selon la revendication 11.

16. Substrat organique pouvant être obtenu par un procédé de teinture et/ou d'impression comprenant la mise en contact d'au moins un composé de formule (I) selon au moins l'une des revendications 1 à 10, ou préparé selon la revendication 11 avec le substrat organique.

17. Substrat organique selon la revendication 16, dans lequel le substrat organique est une matière à base d'une fibre à fin denier ou une microfibre.
